# EUROPÄISCHE PATENTSCHRIFT

(11) **EP 3 180 839 B1**
(45) Veröffentlichungstag und Bekanntmachung des Hinweises auf die Patenterteilung: **23.10.2019**
(21) Anmeldenummer: 15738930.5
(22) Anmeldetag: 20.07.2015
(51) Int. Cl.: H02K 3/24, H02K 9/19, H02K 3/12, H02K 7/18, H02K 1/20

(54) **SYNCHRONGENERATOR, INSBESONDERE VIELPOLIGER SYNCHRON-RINGGENERATOR EINER GETRIEBELOSEN WINDENERGIEANLAGE, UND WINDENERGIEANLAGE MIT SELBIGEM**
SYNCHRONOUS GENERATOR, IN PARTICULAR FOUR-POLE SYNCHRONOUS RING GENERATOR OF A GEARLESS WIND TURBINE, AND WIND TURBINE HAVING SAID SYNCHRONOUS GENERATOR
GÉNÉRATEUR SYNCHRONE, EN PARTICULIER GÉNÉRATEUR ANNULAIRE SYNCHRONE MULTIPOLAIRE D'UNE ÉOLIENNE À ENTRAÎNEMENT DIRECT, ET ÉOLIENNE MUNIE DE CELUI-CI

(30) Priorität: 14.08.2014 DE 102014216148
(43) Veröffentlichungstag der Anmeldung: 21.06.2017
(73) Patentinhaber: Wobben Properties GmbH, 26607 Aurich (DE)
(72) Erfinder: RÖER, Jochen, 27777 Ganderkesee (DE); MIDDELSTÄDT, Falk, 12279 Berlin (DE)
(74) Vertreter: Eisenführ Speiser
(86) Internationale Anmeldenummer: PCT/EP2015/066569
(87) Internationale Veröffentlichungsnummer: WO 2016/023710

(56) Entgegenhaltungen:
- EP-A1- 2 182 570
- CH-A- 357 797
- CH-A- 475 663
- DE-C1- 964 161
- GB-A- 643 890
- GB-A- 2 403 605
- JP-A- S63 274 336
- US-A- 5 642 013
- US-A1- 2005 285 451

## Beschreibung

Die vorliegende Erfindung betrifft einen Synchrongenerator, insbesondere einen vielpoligen Synchron-Ringgenerator einer getriebelosen Windenergieanlage gemäß dem Oberbegriff von Anspruch 1. Ferner betrifft die vorliegende Erfindung eine Windenergieanlage mit einem solchen Synchrongenerator.

In der prioritätsbegründenden deutschen Anmeldung hat das Deutsche Patent- und Markenamt die folgenden Dokumente recherchiert: EP 2 752 578 A1, CH 357 797 A und DE 102 44 202 A1.

Windenergieanlagen sind allgemein bekannt. Sie erzeugen elektrischen Strom aus Wind mittels eines Generators. Moderne getriebelose Windenergieanlagen weisen häufig einen vielpoligen Synchron-Ringgenerator mit großem Luftspaltdurchmesser auf. Der Durchmesser des Luftspalts beträgt hierbei wenigstens vier Meter und reicht üblicherweise bis fast fünf Meter. Aus mehreren Teilen zusammengesetzte Synchrongeneratoren können durchaus Luftspaltdurchmesser im Bereich von zehn Metern oder mehr aufweisen.

Der Wirkungsgrad des Synchrongenerators beeinflusst maßgeblich die Effizienz der gesamten Windenergieanlage bei Stromgewinnung. Um einen möglichst hohen Wirkungsgrad bei der Stromgewinnung zu erzielen, kommt es daher darauf an, die Statorwicklung optimal zu gestalten. Hierzu gehört insbesondere auch, möglichst eine hohe Anzahl Leiterbündel in der Statorwicklung unterzubringen.

Je höher die Materialdichte der Statorwicklung ist, und je stärker das induzierte Feld des Synchrongenerators wird, desto mehr Wärmeentwicklung tritt in der Statorwicklung auf. Die Statorwicklung und der Statorring des Synchrongenerators werden im Betrieb unweigerlich erhitzt. Das Überschreiten vorbestimmter Temperaturgrenzen ist unbedingt zu vermeiden, um beispielsweise Verschlechterungen des Wirkungsgrades oder mechanische Probleme infolge der Wärmeerzeugung und Übertragung auf benachbarte Bauteile zu verhindern.

Demzufolge muss der Generator, insbesondere der Statorring, gekühlt werden.

Aus dem Stand der Technik ist beispielsweise das Kühlen des Statorrings mittels äußerer, am Umfangsrand des Statorrings angeordneter Kühlmittel bekannt.

Diese Kühlmethode hat sich in der Praxis zwar im Wesentlichen als zuverlässig herausgestellt. Dennoch besteht der Bedarf, die erzielbare Kühlleistung am Synchrongenerator der Windenergieanlage, und insbesondere am Statorring, zu verbessern.

EP 2 182 570 A1 zeigt einen Generator einer Windenergieanlage, der einen Stator mit einer Vielzahl von Statorblechen aufweist. Jedes Statorblech umfasst mehrere Schlitze SL von einer Seite des Statorbleches aus. In jedem Schlitz ist am Grund ein Kühlrohr und darüber die Statorwicklung angeordnet. Das Kühlrohr kann einen an die Ausgestaltung des Schlitzes entsprechend angepassten Querschnitt aufweisen.

CH 357797 A zeigt eine Statorwicklung für elektrische Maschinen, die zusammen mit Kühlkanälen in Nuten aufgenommen sind. Mehrere Kühlkanäle sind in unterschiedlichen Höhen der Nut angeordnet, zwischen denen die Statorwicklungen verlaufen.

US 5 642 013 A zeigt einen Synchronmotor mit einem Joch, in dem Schlitze ausgebildet sind. In den Schlitzen sind Windungen einer Spule und am Grund des Schlitzes eine Rohrleitung für eine Kühlflüssigkeit angeordnet. Zur verbesserten Wärmeabfuhr ist der Rohrleitung ein sich zwischen den Windungen und einer Wandfläche des Schlitzes erstreckender Flächenkörper zugeordnet.

Somit wird es als Aufgabe der vorliegenden Erfindung angesehen, wenigstens eines der oben genannten Probleme zu adressieren. Insbesondere soll die Kühlleistung des Synchrongenerators verbessert werden.

Die Erfindung löst die ihr zugrundeliegende Aufgabe bei einem Synchrongenerator der eingangs bezeichneten Art, indem dieser gemäß Anspruch 1 ausgebildet ist.

Unter "vielpolig" wird bei einem Synchron-Ringgenerator einer getriebelosen Windenergieanlage eine Vielzahl von Statorpolen verstanden, insbesondere eine Ausbildung mit wenigstens 48 Statorzähnen, häufig sogar mit deutlich mehr Statorzähnen wie insbesondere 96 Statorzähnen oder noch mehr Statorzähnen. Der magnetisch aktive Bereich des Generators, nämlich sowohl des Rotors, der auch als Läufer bezeichnet werden kann, als auch des Stators ist in einem ringförmigen Bereich um die Drehachse des Synchrongenerators angeordnet. So ist insbesondere ein Bereich von 0 bis wenigstens 50 Prozent des Radius des Luftspalts frei von Materialien, die elektrischen Strom oder elektrisches Feld des Synchrongenerators führen. Insbesondere ist dieser Innenraum vollständig frei und grundsätzlich auch begehbar. Häufig beträgt dieser Bereich auch mehr als 0 bis 50 Prozent des Luftspaltradius, insbesondere bis zu 0 bis 70 Prozent oder sogar 0 bis 80 Prozent des Luftspaltradius. Je nach Aufbau kann eine Tragstruktur in diesem inneren Bereich vorhanden sein, die aber in einigen Ausführungen axial versetzt ausgebildet sein kann. Funktionsbedingt sind solche Synchrongeneratoren einer getriebelosen Windenergieanlage langsam drehende Generatoren. Unter langsam drehend wird hier je nach Anlagengröße eine Drehzahl von unterhalb 40 Umdrehungen pro Minute, insbesondere von etwa 4 bis 35 Umdrehungen pro Minute verstanden.

Die Erfindung macht sich die Erkenntnis zunutze, dass eine optimale Wärmeableitung dadurch gelingt, die Wärme direkt dort aufzunehmen, wo sie erzeugt wird. Im vorliegenden Fall wird beim Erzeugen elektrischen Stroms im Synchrongenerator die Wärme in den Statorwicklungen freigesetzt. Die Erfindung verfolgt den Ansatz, die freigesetzte Wärme an einem Ort aufzunehmen, der möglichst nah an den Statorwicklungen liegt. Das Einfügen eines Kühlkörpers in das Innere der die Statorwicklung aufnehmenden Nut war in der Vergangenheit nie in Erwägung gezogen worden, da es dem primären Ansatz widerstrebte, möglichst viele Leiterbündel in einer Nut bzw. eine möglichst hohe Packungs-Dichte der Statorwicklung in der Nut bereitzustellen.

Es hat sich herausgestellt, dass die vermeintliche Verschlechterung der Generatoreffizienz aufgrund des "Weglassens" von Windungen zugunsten eines Kühlkanals durch den erhöhten Wirkungsgrad einer dann kälteren Wicklung ausgeglichen wird.

In einer vorteilhaften Weiterbildung der Erfindung weist der Kühlkörper wenigstens eine Wicklungskontaktfläche auf, die mit der Statorwicklung in Berührung steht. Je größer die Wicklungskontaktfläche ist, desto größer ist auch der Wärmeübergang zwischen der Statorwicklung und dem Kühlkörper.

Vorzugsweise weist der Kühlkörper wenigstens eine Wandkontaktfläche auf, die mit einer Nutwand in Berührung steht. Gemäß dieser bevorzugten Ausführungsform gelingt es mit dem erfindungsgemäßen Kühlkörper zusätzlich, den Statorring aktiv zu kühlen. Auch bezüglich der Wandkontaktfläche gilt, dass die Wärmeübertragung vom Statorring in den Kühlkörper umso größer ist, je größer die Wandkontaktfläche ausgebildet wird.

Der Kühlkörper weist einen Hohlkörper auf, der fluidleitend mit einem Kühlmedienkreislauf verbunden ist, wobei der Hohlkörper eine Wandung mit einer Innen- und Außenseite aufweist.

Der Kühlkörper weist eine mit einer ersten Nutwand in Berührung stehende, erste Wandkontaktfläche, und eine mit einer der ersten Nutwand gegenüberliegenden zweiten Nutwand in Berührung stehende zweite Wandkontaktfläche auf. Somit erstreckt sich der Kühlkörper wie eine Brücke vollständig von einer Nutwand bis zur nächsten Nutwand. In diese Ausführungsform weist der Kühlkörper vorzugsweise nicht nur zwei Wandkontaktflächen, sondern auch zwei Wicklungskontaktflächen auf, wobei die zweite Wicklungskontaktfläche auf einer der ersten Wicklungskontaktfläche gegenüberliegenden Seite des Kühlkörpers angeordnet ist.

Die Wandkontaktfläche wird zumindest teilweise von der Außenseite der Wandung des Hohlkörpers gebildet. Alternativ oder zusätzlich ist vorzugsweise die Wicktungskontaktftäche zumindest teilweise von der Außenseite der Wandung des Hohlkörpers gebildet. Diese Ausführungsformen ermöglichen einen konstruktiv einfachen Aufbau des Hohlkörpers.

Der Kühlkörper weist einen oder mehrere Stege auf, die sich von der Wandung des Hohlkörpers aus entlang der Nutwände erstrecken und eine der jeweiligen Nutwand zugewandte Außenseite sowie eine gegenüberliegende, an die Statorwicklung angrenzende Innenseite aufweisen. Vorzugsweise ist die Wandkontaktfläche zumindest teilweise von der Außenseite der Stege gebildet, und die Wicklungskontaktfläche ist zumindest teilweise von der Innenseite der Stege gebildet.

In einer weiteren bevorzugten Ausgestaltung des Synchrongenerators weist die Innenseite der Wandung des Hohlkörpers eine oder mehrere Kühlrippen auf. Die Kühlrippen erzeugen eine im Vergleich zur nicht mit Rippen versehenen Oberfläche des Hohlkörpers aufgrund der vergrößerten Kontaktfläche zwischen Kühlmedium und Hohlkörper eine stärkere Wärmeabfuhr in das Kühlmedium hinein.

Der Hohlkörper kann sich nach Art eines Rechtecks zwischen den Nutwänden erstrecken, oder aber auch eine im Vergleich zur Rechtecksform vergrößerte Oberfläche, betrachtet von einer Nutwand aus in Richtung der gegenüberliegenden Nutwand, aufweisen. Vorzugsweise weist der Hohlkörper in radialer Richtung der Nut eine Taillierung auf, oder eine Auswölbung. Unter einer Taillierung wird hierbei sowohl eine konkave Einschnürung verstanden, wie auch eine "eckige" Einbuchtung mit nicht gerundeten Flächenübergängen. Das gleiche gilt anders herum auch für die Auswölbung. Unter der Auswölbung wird sowohl eine konvexe Wölbung verstanden als auch ein "eckiger" Flächenverlauf ohne gerundete Übergänge. Solche "eckig" gewölbten Hohlkörper weisen im Querschnitt im Wesentlichen eine polygonale Form auf.

Die Erfindung betrifft in einem weiteren Aspekt eine Windenergieanlage, insbesondere eine getriebelose Windenergieanlage mit einem Synchrongenerator zum Erzeugen elektrischen Stroms, der insbesondere als vielpoliger Synchrongenerator ausgebildet ist.

Die Erfindung löst die eingangs genannte Aufgabe bei einer solchen Windenergieanlage mittels eines Synchrongenerators, der nach einer der hierin vorstehend beschriebenen bevorzugten Ausführungsformen ausgebildet ist. Hinsichtlich der Vorteile der erfindungsgemäßen Windenergieanlage wird auf die obigen Ausführungen zum Synchrongenerator verwiesen.

Die Erfindung betrifft in noch einem weiteren Aspekt die Verwendung eines Kühlkörpers zum Aufnehmen und Ableiten freigesetzter Wärmeenergie. Erfindungsgemäß wird der Kühlkörper zum Aufnehmen und Ableiten freigesetzter Wärmeenergie aus einer Statorwicklung eines Synchrongenerators nach einer der hierin beschriebenen bevorzugten Ausführungsformen verwendet, wobei der Kühlkörper in einer Nut des Synchrongenerators angeordnet wird.

Vorzugsweise ist der Kühlkörper mit den Merkmalen des Kühlkörpers des vorstehend beschriebenen Synchrongenerators gemäß der Erfindung ausgebildet. Auch diesbezüglich wird hinsichtlich der Vorteile auf die obigen Ausführungen zum erfindungsgemäßen Synchrongenerator verwiesen.

Die Erfindung wird nachfolgend unter Bezugnahme auf die beigefügten Figuren anhand mehrerer bevorzugter Ausführungsbeispiele näher beschrieben. Identische oder funktionsgleiche Merkmale sind hierbei mit identischen Bezugszeichen versehen.

Hierbei zeigen:
- Figur 1: eine Windenergieanlage schematisch in einer perspektivischen Ansicht,
- Figur 2: eine Gondel der Windenergieanlage gemäß Figur 1 schematisch in einer perspektivischen Schnittansicht,
- Figur 3: eine vereinfachte schematische perspektivische Ansicht eines Stators der Windenergieanlage gemäß den Figuren 1 und 2,
- Figur 4: eine partielle Schnittansicht durch den Stator gemäß Figur 3, und
- Figuren 4a-e: verschiedene Ausgestaltungen eines Kühlkörpers für den Einsatz in einem Stator gemäß den Figuren 3 und 4.

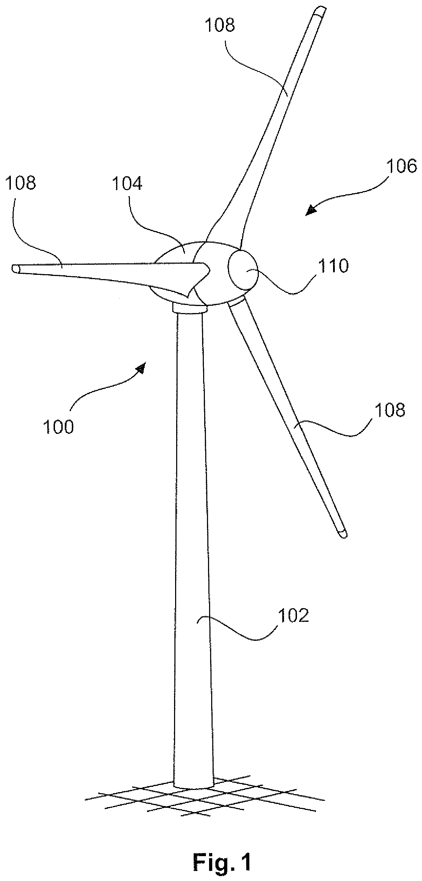

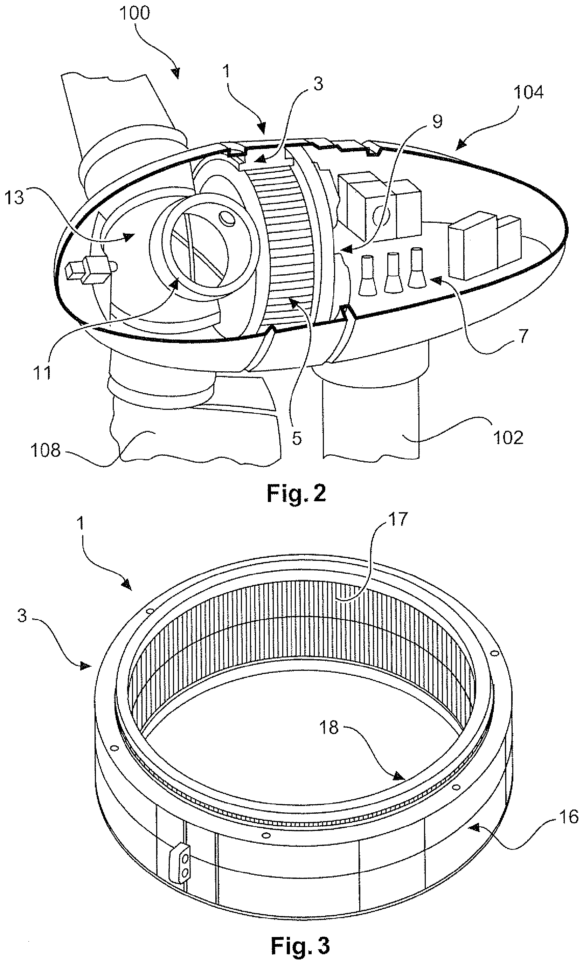

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird in Betrieb durch den Wind in eine Drehbewegung versetzt und treibt dadurch einen Generator 1 (Figur 2) in der Gondel 104 an.

Die Gondel 104 ist in Figur 2 gezeigt. Die Gondel 104 ist drehbar an dem Turm 102 montiert und mittels eines Azimutantriebs 7 in allgemein bekannter Weise angetrieben verbunden. In ferner allgemein bekannter Weise ist in der Gondel 104 ein Maschinenträger 9 angeordnet, der einen Synchrongenerator 1 hält. Der Synchrongenerator 1 ist gemäß der vorliegenden Erfindung ausgebildet und ist insbesondere ein langsam drehender, vielpoliger Synchron-Ringgenerator. Der Synchrongenerator 1 weist einen Stator 3 und einen innen laufenden Rotor 5 auf, auch bezeichnet als Läufer. Der Rotor beziehungsweise Läufer 5 ist mit einer Rotornabe 13 verbunden, die die durch den Wind verursachte Rotationsbewegung der Rotorblätter 108 an den Synchrongenerator 1 überträgt.

Figur 3 zeigt den Stator 3 in Alleinstellung. Der Stator 3 weist einen Statorring 16 mit einer inneren Umlauffläche 18 auf. In der inneren Umlauffläche 18 ist eine Vielzahl von Nuten 17 vorgesehen, die zur Aufnahme der Statorwicklung in Form von Leiterbündeln ausgebildet sind.

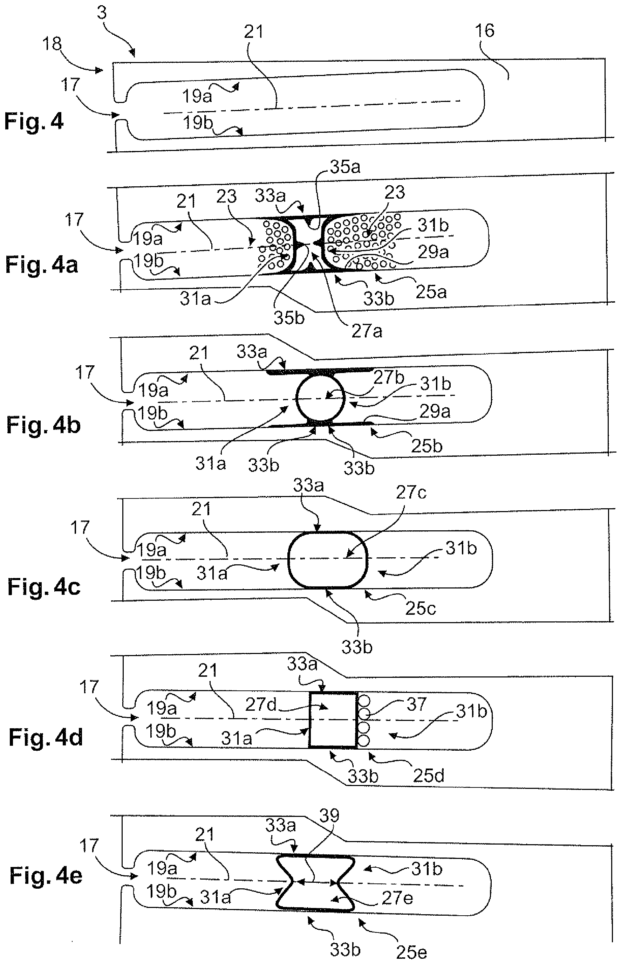

Figur 4 zeigt eine Querschnittsansicht durch eine Nut 17 des Statorrings 16. Die Nut erstreckt sich in im Wesentlichen radialer Richtung entlang einer Nutachse 21. Die Nut 17 weist eine erste Nutwand 19a und eine der ersten Nutwand gegenüberliegende zweite Nutwand 19b auf.

In den Figuren 4a-e sind verschiedene Ausführungsformen eines Kühlkörpers 25a-e für den erfindungsgemäßen Synchrongenerator 1, angeordnet jeweils in einer der Nuten 17, dargestellt.

Der in Figur 4a dargestellte Kühlkörper 25a ist, was seine äußere Kontur angeht, im Wesentlichen in Form eines geschwungenen X ausgebildet. Der Kühlkörper 25a weist eine erste Wicklungskontaktfläche 31a und eine zweite Wicklungskontaktfläche 31b auf, die in Berührung mit einer Statorwicklung 23 stehen. Dies gilt auch für die Wicklungskontaktfläche 31a,b der Kühlkörper 25b-e aus den Figuren 4b-e, in welchen allerdings zur besseren Übersichtlichkeit auf die Darstellung der Statorwicklung 23 verzichtet wurde.

Der Kühlkörper 25a weist zudem eine erste Wandkontaktfläche 33a und eine zweite Wandkontaktfläche 33b auf, die sich jeweils entlang der Nutwände 19a+b erstrecken und an ihnen anliegen. Die Wandkontaktflächen 33a,b werden gemäß Figur 4a teilweise von der Außenseite der Wandung des Hohlkörpers 27a gebildet. Der Kühlkörper 25a weist gemäß Figur 4a zudem mehrere Stege 29a auf, von denen einer der Übersichtlichkeit halber mit Bezugszeichen versehen ist. Die Stege erstrecken sich von der Wandung des Hohlkörpers 27a aus entlang der Nutwände 19a,b. Eine Außenseite der Stege 29a bildet ebenfalls einen Teil der Wandkontaktfläche 33a,b, während eine Innenseite der Stege 29a jeweils einen Teil der Wicklungskontaktfläche 31a,b des Kühlkörpers 25a bildet. Hierdurch wird die Gesamtoberfläche des Kühlkörpers 25a vergrößert.

Die Innenseite der Wandung des Hohlkörpers 27a weist mehrere Kühlrippen 35a,b auf, die jeweils zum Vergrößern der Oberfläche der Wandung des Hohlkörpers 27a dienen.

Der Hohlkörper 25a ist in Richtung der Nut 17, bzw. in Richtung der Nutachse 21 tailliert bzw. beidseitig konkav eingeschnürt.

Der in Figur 4b gezeigte Kühlkörper 25b ähnelt strukturell dem Kühlkopf 25a aus Figur 4a insofern, dass er einen Hohlkörper 27b aufweist, und mehrere sich von dem Hohlkörper 27b aus erstreckende Stege 29b, wobei die Wandkontaktfläche 33a,b jeweils teilweise von der Außenseite der Wandung des Hohlkörpers 27b, und von der Außenseite der Stege 29b gebildet ist. Ebenso ist die Wicklungskontaktfläche teilweise von der Außenseite der Wandung des Hohlkörpers 27b und von den Innenseiten der Stege 29b gebildet.

Im Unterschied zu dem Kühlkörper 25a ist der Hohlkörper 27b des Kühlkörpers 25b als im Wesentlichen zylindrisches Rohr ausgebildet, an welchem außen tangential die Stege angeordnet sind. In Richtung der Nutachse 21 ist der Hohlkörper 27b bauchig geformt, weist also eine Auswölbung auf.

Der Kühlkörper 25c aus Figur 4c ist mit einem im Wesentlichen ovalen Querschnitt gebildet, und weist an den den Nutwänden 19a,b zugewandten Seiten einen ungekrümmten Außenwandungsabschnitt auf, der an den Nutwänden 19a,b anliegt und die Wandkontaktflächen 33a,b des Kühlkörpers 25c bildet. Im Unterschied zu den Figuren 4a,b weist der Kühlkörper 25c keine Stege auf. Er ist aber wie der Kühlkörper 25b gemäß Figur 4b in radialer Richtung bzw. der Nutachse 21 bauchig geformt und weist somit eine Auswölbung auf, bzw. ist beidseitig konvex gewölbt.

Der in Figur 4d dargestellte Kühlkörper 25d weist einen Hohlkörper 27d auf, der ein im Wesentlichen rechteckiges Querschnittsprofil aufweist. Die Wicklungskontaktflächen 31a,b erstrecken sich im Wesentlichen auf kürzestem Wege von der einen Nutwand 19a zur gegenüberliegenden Nutwand 19b, von wo aus sich dann jeweils die Wandkontaktfläche 33a,b in Form der Außenseite der Wandung des Hohlkörpers 27d entlang der Nutwände 19a,b erstreckt.

Mit Bezugszeichen 37 sind angedeutete Querschnitte von Wicklungsdrähten gekennzeichnet.

Der Kühlkörper 27d ist weder tailliert noch mit einer bauchigen Auswölbung ausgebildet.

Figur 4e zeigt schließlich einen Kühlkörper 25e, der ähnlich wie die Kühlkörper 25c,d aus den Figuren 4c,d keine Stege aufweist, so dass die Wandkontaktflächen 33a,b vollständig von der Außenseite der Wandung des Hohlkörpers 27e gebildet werden. In Richtung der Pfeile 39, die vorzugsweise auf der Nutachse 21 liegen, ist der im Wesentlichen polygonförmige Querschnitt des Hohlkörpers 27e eingeschnürt, so dass eine Taillierung ausgebildet ist. Diese kann, wie im in Figur 4e gezeigten Beispiel, mit abgerundeten Kanten ausgebildet sein, oder aber auch mit eckigen Kanten, so dass ein Doppeltrapez ausgebildet wird, welches die Nutachse 21 als Symmetrieachse besitzt.

Wenngleich die Kühlkörper 25c,d,e in den gezeigten Ausführungsbeispielen ohne Stege abgebildet sind, liegt es gleichwohl im Rahmen der Erfindung, auch diese Kühlkörper mit Stegen zu versehen, genauso wie es im Rahmen der Erfindung liegt, Kühlkörper vorzusehen, die strukturell im Wesentlichen so ausgebildet sind wie die Kühlkörper 25a,b aus den Figuren 4a,b, jedoch keine Stege aufweisen.

Ebenso ist es im Rahmen der Erfindung, dass auch die Kühlkörper der Figuren 4b-e auf der Innenseite der Wandung der Hohlkörper 27b-e jeweils eine oder mehrere Kühlrippen aufweisen.

Auch liegen solche Querschnittsprofile im Rahmen der Erfindung, bei denen eine erste Wicklungskontaktfläche bauchig ausgewölbt ist, und die gegenüberliegende zweite Wicklungskontaktfläche eingeschnürt ist, oder aber weder ausgewölbt ist noch eingeschnürt ist. Ebenso liegen solche Querschnittsprofile im Rahmen der Erfindung, bei denen nur eine Wicklungskontaktfläche mit einer Taillierung versehen ist, also in Richtung des inneren des Hohlkörpers eingedrückt ist, während die gegenüberliegende zweite Wicklungskontaktfläche gerade, also weder ausgewölbt noch tailliert ausgebildete ist.

Sofern es für den jeweiligen Anwendungsfall vorteilhaft ist, werden mehrere oder sämtliche Nuten des Statorrings 16 einen identischen Kühlkörper 25a-e aufweisen, oder aber auch wird der Statorring 16 für verschiedene Gruppen von Nuten 17 unterschiedliche Kühlkörpergeometrien 25a-e vorsehen.

Weitere bevorzugte Ausführungsformen ergeben sich aus den unterschiedlichen Kombinationen der folgenden Patentansprüche.

## Patentansprüche

1. Synchrongenerator (1), insbesondere vielpoliger Synchron-Ringgenerator einer getriebelosen Windenergieanlage (100), zum Erzeugen elektrischen Stroms, mit einem Rotor (4) und einem Stator (3), wobei der Stator (3) eine Vielzahl von Nuten (17) aufweist, in denen eine Statorwicklung angeordnet ist, wobei die Statorwicklung (23) infolge der Stromerzeugung Wärmeenergie freisetzt, und
wobei in einer, mehreren oder sämtlichen Nuten (17) ein Kühlkörper (25a,b) zum Aufnehmen und Ableiten freigesetzter Wärmeenergie angeordnet ist,
wobei der Kühlkörper einen Hohlkörper (27a,b) aufweist, der fluidleitend mit einem Kühlmedienkreislauf verbunden ist, wobei der Hohlkörper eine Wandung mit einer Innen- und Außenseite aufweist,
wobei der Kühlkörper (25a,b) eine mit einer ersten Nutwand (19a) in Berührung stehende erste Wandkontaktfläche (33a), und eine mit einer der ersten Nutwand gegenüberliegenden zweiten Nutwand (19b) in Berührung stehende zweite Wandkontaktfläche (33b) aufweist, wobei die Wandkontaktfläche (33a,b) zumindest teilweise von der Außenseite der Wandung des Hohlkörpers (27a-c) gebildet ist, und
wobei der Kühlkörper (25a-e) wenigstens eine Wicklungskontaktfläche (31a,b) aufweist, die mit der Statorwicklung (23) in Berührung steht, wobei die Wicklungskontaktfläche (31a,b) zumindest teilweise von der Außenseite der Wandung des Hohlkörpers (27a-c) gebildet ist,
**dadurch gekennzeichnet,**
**dass** der Kühlkörper (25a,b) an jeder Wandkontaktfläche (33a,b) mehrere Stege (29a,b) aufweist, die sich in entgegengesetzte Richtungen von der Wandung des Hohlkörpers (27a,b) aus entlang der Nutwände (19a,b) erstrecken und eine der jeweiligen Nutwand zugewandte Außenseite sowie eine gegenüberliegende, an die Statorwicklung (23) angrenzende Innenseite aufweisen, wobei die Wandkontaktfläche zumindest teilweise von der Außenseite der Stege und die Wicklungskontaktfläche zumindest teilweise von der Innenseite der Stege gebildet ist.

2. Synchrongenerator nach Anspruch 1,
wobei die Innenseite der Wandung des Hohlkörpers (27a) eine oder mehrere Kühlrippen (35a,b) aufweist.

3. Synchrongenerator nach einem der Ansprüche 1 bis 2,
wobei der Hohlkörper (27a,e) in radialer Richtung der Nut (17) eine Taillierung aufweist.

4. Synchrongenerator nach einem der Ansprüche 1 bis 2,
wobei der Hohlkörper (27a,c) in radialer Richtung der Nut (17) eine Auswölbung aufweist.

5. Windenergieanlage (100), insbesondere getriebelose Windenergieanlage,
mit einem Synchrongenerator (1) zum Erzeugen elektrischen Stroms, der insbesondere als vielpoliger Synchrongenerator ausgebildet ist,
wobei der Synchrongenerator nach einem der vorstehenden Ansprüche ausgebildet ist.

6. Verwendung eines Kühlkörpers zum Aufnehmen und Ableiten freigesetzter Wärmeenergie aus einer Statorwicklung (23) eines Synchrongenerators (1) nach einem der Ansprüche 1 bis 5,
wobei der Kühlkörper in einer Nut (17) des Synchrongenerators angeordnet wird.

## Claims

1. Synchronous generator (1), in particular a multipole synchronous annular generator of a direct-drive wind turbine (100), for generating electricity, with a rotor (4) and a stator (3), wherein the stator (3) has multiple grooves (17) in which a stator winding is arranged, wherein the stator winding (23) releases heat energy as a result of the generation of power, and
wherein a cooling body (25a,b) for absorbing and dissipating released heat energy is arranged in one groove (17), multiple grooves (17) or all the grooves (17),
wherein the cooling body has a hollow body (27a,b) which is fluidically connected to a cooling medium circuit, wherein the hollow body has a wall with an inner and an outer side,
wherein the cooling body (25a,b) has a first wall contact surface (33a), in contact with a first groove wall (19a), and a second wall contact surface (33b), in contact with a second groove wall (19b) opposite the first groove wall,
wherein the wall contact surface (33a,b) is formed at least partially by the outside of the wall of the hollow body (27a-c), and
wherein the cooling body (25a-e) has at least one winding contact surface (31a,b) which is in contact with the stator winding (23).
wherein the winding contact surface (31a,b) is formed at least partially by the outside of the wall of the hollow body (27a-c),
**characterized in that** the cooling body (25a,b) has a plurality of projections (29a,b) on each wall contact surface (33a,b) which extend in opposite directions from the wall of the hollow body (27a,b) along the groove walls (19a,b) and have an outer side facing the respective groove wall, as well as an opposite inner side adjoining the stator winding (23), wherein the wall contact surface is formed at least partially by the outer side of the projections and the winding contact surface is formed at least partially by the inner side of the projections.

2. Synchronous generator according to Claim 1, wherein the inner side of the wall of the hollow body (27a) has one or more cooling ribs (35a,b).

3. Synchronous generator according to one of Claims 1 to 2, wherein the hollow body (27a,e) has a waisted design in the radial direction of the groove (17).

4. Synchronous generator according to one of Claims 1 to 2, wherein the hollow body (27a,c) has a bulge in the radial direction of the groove (17).

5. Wind turbine (100), in particular a direct-drive wind turbine with a synchronous generator (1) for generating electricity which is in particular designed as a multipole synchronous generator, wherein the synchronous generator is designed according to one of the preceding claims.

6. Use of a cooling body for absorbing and dissipating released heat energy from a stator winding (23) of a synchronous generator (1) according to one of Claims 1 to 5, wherein the cooling body is arranged in a groove (17) of the synchronous generator.

## Revendications

1. Générateur synchrone (1), en particulier générateur annulaire synchrone multipolaire, d'une éolienne à entraînement direct (100), pour la production de courant électrique, avec un rotor (4) et un stator (3), dans lequel le stator (3) présente une pluralité de rainures (17), dans lesquelles une bobine de stator est disposée, dans lequel la bobine de stator (23) libère de l'énergie thermique suite à la production d'électricité, et
dans lequel dans une, plusieurs ou toutes les rainures (17), un corps de refroidissement (25a, b) est disposé pour la réception et l'évacuation d'énergie thermique libérée,
dans lequel le corps de refroidissement présente un corps creux (27a, b) qui est relié par écoulement de fluide à un circuit d'agents réfrigérants, dans lequel le corps creux présente une paroi avec des côtés intérieur et extérieur,
dans lequel le corps de refroidissement (25a, b) présente une première surface de contact de paroi (33a) en contact avec une première paroi de rainure (19a), et une seconde surface de contact de paroi (33b) en contact avec une seconde paroi de rainure (19b) opposée à la première paroi de rainure, dans lequel la surface de contact de paroi (33a, b) est formée au moins en partie par le côté extérieur de la paroi du corps creux (27a-c), et
dans lequel le corps de refroidissement (25a-e) présente au moins une surface de contact de bobine (31a, b) qui est en contact avec la bobine de stator (23), dans lequel la surface de contact de bobine (31a, b) est formée au moins en partie par le côté extérieur de la paroi du corps creux (27a-c),
**caractérisé en ce**
**que** le corps de refroidissement (25a, b) présente, au niveau de chaque surface de contact de paroi (33a, b), plusieurs entretoises (29a, b) qui s'étendent dans des directions opposées à partir de la paroi du corps creux (27a, b) le long des parois de rainure (19a, b) et présentent un côté extérieur tourné vers la paroi de rainure respective ainsi qu'un côté intérieur opposé adjacent à la bobine de stator (23), dans lequel la surface de contact de paroi est formée au moins en partie par le côté extérieur des entretoises et la surface de contact de bobine, au moins en partie par le côté intérieur des entretoises.

2. Générateur synchrone selon la revendication 1,
dans lequel le côté intérieur de la paroi du corps creux (27a) présente une ou plusieurs nervures de refroidissement (35a, b).

3. Générateur synchrone selon l'une quelconque des revendications 1 à 2,
dans lequel le corps creux (27a, e) présente, dans la direction radiale de la rainure (17), un étranglement.

4. Générateur synchrone selon l'une quelconque des revendications 1 à 2,
dans lequel le corps creux (27a, c) présente, dans la direction radiale de la rainure (17), un bombement.

5. Éolienne (100), en particulier éolienne à entraînement direct,
avec un générateur synchrone (1) pour la production de courant électrique, qui est réalisé en particulier en tant que générateur synchrone multipolaire,
dans lequel le générateur synchrone est réalisé selon l'une quelconque des revendications précédentes.

6. Utilisation d'un corps de refroidissement pour la réception et l'évacuation d'énergie thermique libérée d'une bobine de stator (23) d'un générateur synchrone (1) selon l'une quelconque des revendications 1 à 5,
dans laquelle le corps de refroidissement est disposé dans une rainure (17) du générateur synchrone.
